# EUROPEAN PATENT SPECIFICATION

(11) **EP 3 275 953 B1**
(45) Date of publication and mention of the grant of the patent: **15.04.2020**
(21) Application number: 17182852.8
(22) Date of filing: 24.07.2017
(51) Int. Cl.: C08K 5/1535, C09D 129/04, F28F 19/04

(54) **ORGANIC HYDROPHILIC COATING COMPOSITION AND HYDROPHILIC FILM FOR ALUMINUM MATERIAL FOR A HEAT EXCHANGER**
ORGANISCHE HYDROPHILE BESCHICHTUNGSZUSAMMENSETZUNG UND HYDROPHILEN FILM FÜR ALUMINIUMMATERIAL FÜR EINEN WÄRMETAUSCHER
COMPOSITION DE REVÊTEMENT HYDROPHILE ORGANIQUE ET FILM HYDROPHILE POUR MATÉRIAU EN ALUMINIUM POUR ÉCHANGEUR THERMIQUE

(30) Priority: 26.07.2016 JP 2016146798
(43) Date of publication of application: 31.01.2018
(73) Proprietor: Alcom Nikkei Specialty Coating Sdn. Bhd., 41050 Klang, Selangor (MY)
(72) Inventor: ISHII, Toru, 41050 Klang, Selangor Darul Ehsan (MY); MOHAMED-NASRI, Nur-Sarafina, 41050 Klang, Selangor Darul Ehsan (MY); SHAH, Nabila Farhana Azrin, 41050 Klang, Selangor Darul Ehsan (MY)
(74) Representative: Vossius & Partner Patentanwälte Rechtsanwälte mbB

(56) References cited:
- JP-B2- 3 890 908
- JP-B2- 5 319 952
- US-B1- 6 338 876

## Description

### BACKGROUND OF THE INVENTION

### 1. Field of the Invention

The present invention relates to an organic hydrophilic coating composition for forming a hydrophilic film on each of surfaces of various hard materials including a metallic material, such as an aluminum material made of aluminum or an aluminum alloy, a copper material made of copper or an alloy thereof, or a steel material, a plastic material, and a ceramics material, such as glass or tile, and a hydrophilic film formed using the organic hydrophilic coating composition, and an aluminum material for a heat exchanger including the hydrophilic film.

### 2. Description of the Related Art

Hydrophilic hard materials having hydrophilic films on the surfaces of various hard materials, such as metallic materials, plastic materials, and ceramics materials, are used in various fields. For example, a hydrophilic hard material including an aluminum material as the hard material is light and excellent in thermal conductivity, processability, and the like, and hence is widely used in applications such as air-conditioning units to be used in buildings and automobiles, as various aluminum materials for heat exchangers, such as a fin material and a tube material.

In addition, such hydrophilic hard materials are each required to have not only excellent hydrophilicity but also various specific functions depending on intended purposes. For example, in the case of an aluminum material for a heat exchanger, in particular, a fin material, in order to enhance heat-exchange efficiency of a heat exchanger or in order to reduce the size of the heat exchanger, or by extension, an air-conditioning unit, fins are spaced as closely as possible or subjected to treatment for forming cuts called louvers. Accordingly, water in air is condensed on the surface of a heat exchanger, such as the surface of the fin, during, for example, air conditioning for cooling, and the resultant condensed water is liable to remain as a water droplet on the surface of the heat exchanger to reduce an area for heat exchange, resulting in lowering heat-exchange efficiency, or to form a bridge between the fins to increase airflow resistance, resulting in significantly lowering the heat-exchange efficiency of the heat exchanger. Therefore, an attempt to prevent generation of water droplets resulting from condensed water for a long period of time is made as described below. A hydrophilic film is formed on each of the surfaces of the fin materials using a hydrophilic coating composition to enhance water wettability on each of the surfaces of the fin materials, resulting in suppressing the generation of the water droplets as much as possible. In addition, such fin materials are supplied as precoated fin materials each obtained by forming a hydrophilic film before integration into a heat exchanger so as to have long-term hydrophilicity.

In view of the foregoing, as such hydrophilic coating composition for forming a hydrophilic film on the surface of an aluminum material for a heat exchanger, hitherto, there have been proposed: inorganic hydrophilic coating compositions, such as liquid glass and silica; and organic hydrophilic coating compositions each including a water-soluble hydrophilic resin, such as a polyvinyl alcohol resin, a polyacrylamide resin, a polyacrylic resin, or a cellulose resin, which can solve problems resulting from the inorganic hydrophilic coating compositions, i.e., problems with unpleasant odors during mold wear in molding or air conditioning for cooling (see Japanese Patent Application Laid-open No. Sho 63-173632, Japanese Patent Application Laid-open No. Hei 2-258874, Japanese Patent Application Laid-open No. Hei 5-302042, and Japanese Patent Application Laid-open No. Hei 9-14889). However, even though hydrophilic films formed using those organic hydrophilic coating compositions can eliminate the problems resulting from hydrophilic films formed using the inorganic hydrophilic coating compositions, there arise new different problems, i.e., problems of reductions in water resistance and long-term hydrophilicity.

Further, there have been proposed: an organic hydrophilic coating composition obtained by adding a nitrate compound having a monovalent or divalent element to each of a polyvinyl alcohol resin and a polyethylene glycol resin, which can solve a problem resulting from a hydrophilic film formed using each of the organic hydrophilic coating compositions (Japanese Patent No. 3890908); and an organic hydrophilic coating composition obtained by adding a specific compound selected from dibutylhydroxytoluene, a carbazide compound, L-ascorbic acid, sodium L-ascorbate, L-ascorbyl stearate, erythorbic acid, sodium erythorbate, and sodium sulfite to a hydrophilic resin, such as a polyacrylate/sulfonate copolymer, which can secure long-term hydrophilicity and has pollution resistance for preventing adhesion of pollutants, such as organic acids or organic esters (Japanese Patent No. 5319952) US6338876B1 discloses a process for hydrophilic treatment of aluminum materials used in air conditioners as fins in the heat-exchanging units, to bestow hydrophilicity on the surface, to primers useful for said hydrophilic treatment and to PVA/PEG-based hydrophilic coatings.

Meanwhile, many of recent air-conditioning units to be used in buildings, automobiles, and the like are air-conditioning units for air cooling and heating, which are used for air conditioning for heating in winter and for air conditioning for cooling in summer, and the usage environment in winter of an aluminum material for a heat exchanger, in particular, a fin material, to be used in such air-conditioning units for air cooling and heating is completely different from that in summer. For example, dew condensation water is not generated in use of the air-conditioning units for air heating in winter, and hence an environment in which various pollutants, such as oil droplets in cooking, oily smears due to wax or oil for flooring, oily smears due to hair dressings and cosmetics, oily smears of nicotine and polyaromatic hydrocarbons due to smoking, and house dust, are liable to adhere to the units is established. In contrast, dew condensation water is generated in use of the air-conditioning units for air cooling in summer, and hence an environment in which such pollutants are hard to adhere to the units is established. Accordingly, from the viewpoint of maintaining excellent heat-exchange efficiency for as long a time as possible, the hydrophilic film in a precoated fin material desirably has not only the above-mentioned properties including long-term hydrophilicity but also the so-called "self-cleaning property" that enables easy removal of a pollutant or the like, which temporarily adheres to the hydrophilic film of the fin material in use of the air-conditioning units for air heating, with condensed water generated on the surface of the fin material in use of the air-conditioning units for air cooling.

Accordingly, hitherto, there have been proposed: a coating composition obtained by adding, at predetermined ratios, ammonia or an amine, such as dimethylethanolamine (DMEA), triethanolamine (TEA), or dimethylamine (DMA), and an alkali metal hydroxide, such as carboxymethylcellulose sodium (CMC-Na), carboxymethylcellulose ammonium (CMC-ammonium), or hydroxymethylcellulose (HMC), to an aqueous solution of an acrylic polymer mixture including 15% by weight or more, in a solid component, of an acrylic polymer (A: a polymer including 40 mol% or more of each of a sulfonic acid group-containing monomer and a carboxyl group-containing monomer) and 40% by weight or more, in the solid component, of an acrylic polymer (B: a polymer including 65 mol% or more of a carboxyl group-containing monomer) ; and a fin for a heat exchanger having a coating film formed using the coating composition. When the coating composition and the fin for a heat exchanger are used, a pollutant adhering to the coating, such as oil and fat, can be washed out with dew condensation water generated during air conditioning for cooling. Thus, hydrophilicity can be maintained for a long period of time (Japanese Patent Application Laid-open No. 2010-159379).

### SUMMARY OF THE INVENTION

However, although a hydrophilic film formed using the organic hydrophilic coating composition of Japanese Patent No. 3890908 uses a polyvinyl alcohol resin as a resin component, and hence exhibits certain properties in terms of initial hydrophilicity and long-term hydrophilicity, hydroxyl groups in two linear polymer chains adjacent to each other of the polyvinyl alcohol resin gradually form a hydrogen bond to cause the so-called crystallization of the polyvinyl alcohol resin to proceed, and to gradually decrease the number of hydroxyl groups of the polyvinyl alcohol resin. Therefore, the organic hydrophilic coating composition is not necessarily sufficient particularly in terms of long-term hydrophilicity for the formation of a hydrophilic film for an aluminum material for heat exchange of an air-conditioning unit for air cooling and heating to be used all year round, in particular, a fin material.

In addition, with regard to a hydrophilic film formed using the organic hydrophilic coating composition of Japanese Patent No. 5319952, in Examples thereof, there is a disclosure about the resin components for forming the hydrophilic resin layer (B) (Coating Material Nos. 1 to 19 and 25 to 27) that Coating Material Nos. 1 to 16 and 25 to 27 are each a polyacrylic acid/sulfonic acid copolymer, Coating Material No. 17 is a combination of polyacrylic acid, polyacrylamide, and polyethylene glycol, and Coating Material Nos. 18 and 19 are each a combination of polyacrylamide, polyethylene glycol, and PVA. Thus, extremely limited resin components are only tested, and an acrylic resin is used in each of the resin components for forming the hydrophilic resin layer (B) . In this regard, the inventors of the present invention have performed a replication test using each of Coating Material Nos. 2, 17, and 18 as the resin component for forming the hydrophilic resin layer (B), and as a result, have confirmed that in each case, predetermined properties are exhibited in terms of initial hydrophilicity, water resistance, and adhesion, but desired properties are not exhibited in terms of long-term hydrophilicity and self-cleaning property. An investigation made by the inventors of the present invention has revealed that the failure to exhibit the long-term hydrophilicity and the self-cleaning property, in particular, the self-cleaning property is probably due to a remarkably low hydroxyl value in the coating composition resulting from the fact that the main component of the resin component for forming the hydrophilic resin layer (B) is the acrylic resin, such as polyacrylic acid or polyacrylamide, and hence such coating composition is not suitable for an aluminum material for a heat exchanger, in particular, a fin material.

Further, the coating composition of Japanese Patent Application Laid-open No. 2010-159379 contains, as a main component, a special acrylic polymer mixture including the acrylic polymers (A) and (B), and it is essentially required that a special alkali metal hydroxide be used therein and ammonia or an amine be added thereto. As a result, a product cost inevitably increases. In addition, the coating composition always causes generation of amine odor when applied, may cause generation of amine odor during air conditioning for cooling and heating, and hence has problems with unpleasant odors different from the problems with unpleasant odors of the inorganic hydrophilic coating composition during mold wear in molding or air conditioning for cooling.

In view of the foregoing, the inventors of the present invention have made extensive investigations on development of an organic hydrophilic coating composition that has properties of a related-art composition, such as long-term hydrophilicity, that causes no problems with the unpleasant odors, that can exhibit the self-cleaning property by which a pollutant or the like temporarily adhering to the surface of a hydrophilic film can be easily washed out during use, and that is useful in, but not particularly limited to, an aluminum material for a heat exchanger, such as a precoated fin material. As a result, the inventors have surprisingly found that when a polyvinyl alcohol resin is used as a resin component and ascorbic acid is added as an additional component at a predetermined ratio, the ascorbic acid exhibits a hydrogen bond-suppressing effect to remarkably suppress the crystallization of the polyvinyl alcohol resin, and thus long-term hydrophilicity is exhibited, and a self-cleaning property is also exhibited. Thus, the present invention has been completed.

Accordingly, an object of the present invention is to provide an organic hydrophilic coating composition for forming a hydrophilic film having not only properties including long-term hydrophilicity but also a self-cleaning property on the surface of any of various hard materials, such as metallic materials, plastic materials, and ceramics materials.

Another object of the present invention is to provide an aluminum material for a heat exchanger, such as a precoated fin material, having a hydrophilic film formed using such organic hydrophilic coating composition.

That is, the gist of the present invention is as described below.
(1) An organic hydrophilic coating composition, including: a polyvinyl alcohol resin as a resin component at a ratio of from 40 g/L to 100 g/L; a polyethylene glycol resin as a resin component at a ratio of from 4g/L to 15g/L; and ascorbic acid as an additional component at a ratio of from 0.02 g/L to 39 g/L, the organic hydrophilic coating composition having a hydroxyl value of from 550 mgKOH/g to 1,300 mgKOH/g.
(2) An organic hydrophilic coating composition according to Item (1), in which the polyvinyl alcohol resin includes a completely saponified polyvinyl alcohol resin.
(3) A hydrophilic film, which is formed by applying and baking the organic hydrophilic coating composition of any one of Items (1) or (2), in which the hydrophilic film is configured to cover a part or whole of a surface of a main body of a hard material.
(4) An aluminum material for a heat exchanger, including a hydrophilic film formed by applying and baking the organic hydrophilic coating composition of any one of Items (1) or (2) on a part or whole of a surface of an aluminum material made of aluminum or an aluminum alloy.
(5) An aluminum material for a heat exchanger according to Item (4), in which the aluminum material for a heat exchanger includes a precoated fin material.

According to the organic hydrophilic coating composition of the present invention, the hydrophilic film that causes no problems with unpleasant odors and has not only properties including long-term hydrophilicity but also a self-cleaning property can be formed on the surface of any of various hard materials, such as metallic materials, plastic materials, and ceramics materials.

In addition, the aluminum material for a heat exchanger having a hydrophilic film formed using the organic hydrophilic coating composition of the present invention, such as a precoated fin material, causes no problems with unpleasant odors and exhibits not only properties such as long-term hydrophilicity but also a self-cleaning property by which a pollutant is easily washed out with water, such as dew condensation water, approaching the surface of the material during, for example, air conditioning for cooling even if the surface is polluted during, for example, air conditioning for heating in which dew condensation water or the like is not generated. In addition, a washing operation performed at intervals can be carried out much more easily than the operation used to be.

### DETAILED DESCRIPTION OF THE PREFERRED EMBODIMENTS

An organic hydrophilic coating composition and a hydrophilic film, and an aluminum material for a heat exchanger of the present invention are described below in detail.

The organic hydrophilic coating composition of the present invention contains a polyvinyl alcohol resin (PVA) as a resin component and ascorbic acid as an additional component.

The polyvinyl alcohol resin (PVA) constituting the resin component in the organic hydrophilic coating composition of the present invention is a linear polymer having a repeating structure represented by -[CH₂-CH(OH)]ₙ-, is a completely saponified polyvinyl alcohol having a degree of saponification of preferably 97 mol% or more, more preferably 98.5 mol% or more and 99.8 mol% or less, and is a PVA having an average degree of polymerization (n) of preferably from 500 to 2,000, more preferably from 1,000 to 1,700. When the degree of saponification is less than 97 mol%, both hydrophilicity and water resistance may deteriorate. In addition, when the average degree of polymerization (n) is less than 500, both hydrophilicity and water resistance may deteriorate. In contrast, when the average degree of polymerization (n) is more than 2,500, the viscosity may increase to deteriorate workability.

Such polyvinyl alcohol resin (PVA) includes modified products having various functional groups introduced. For example, many commercially available products, such as a PVA having an ethylene oxide group introduced (manufactured by Nippon Synthetic Chemical Industry Co., Ltd., trade name: WO-320N), a PVA having a carboxyl group introduced (manufactured by Nippon Synthetic Chemical Industry Co., Ltd., trade name: T-330H), a PVA having an acetoacetyl group introduced, and a PVA having a sulfonic acid group introduced, have been placed on the market, and all of the products may be used.

In addition, a polyethylene glycol resin (PEG) is preferably blended as the resin component of the organic hydrophilic coating composition to further improve long-term hydrophilicity of a hydrophilic film formed using the composition. Such polyethylene glycol resin (PEG) has a weight-average molecular weight of preferably 1,000 or more and 20,000 or less, more preferably 4,000 or more and 11,000 or less, and examples thereof may include polyethylene glycol serving as a homopolymer, and a copolymer of ethylene glycol and propylene glycol. When the weight-average molecular weight is less than 1,000, the hydrophilicity may relatively deteriorate. In contrast, when the weight-average molecular weight is more than 20,000, stability of a coating bath may deteriorate . When the PEG is blended in the resin component, the blending ratio of the PEG is 10% by mass or more and 22% by mass or less, preferably 14% by mass or more and 19% by mass or less, with respect to the total of the PVA and the PEG. When the blending ratio of the PEG is less than 10% by mass, an effect resulting from blending of the PEG is low. In contrast, even when the blending ratio of the PEG is more than 22% by mass, the effect resulting from blending of the PEG is lowered.

In addition, in the present invention, the polyvinyl alcohol resin (PVA) is used as the resin component, and ascorbic acid having a hydrogen bond-suppressing effect is added as an additional component to the resin component. The ascorbic acid used as the additional component has two hydroxyl groups bonded to a five-membered ring. The hydroxyl groups enable, in the PVA that is a linear polymer for forming a hydrophilic film, the ascorbic acid to exist between linear polymer chains of the PVA and to expand part of spaces between the linear polymer chains such that formation of a hydrogen bond of hydroxyl groups (OH) in the linear polymer chains expanded is suppressed. Probably as a result of the foregoing, the so-called hydrogen bond-suppressing effect is exhibited to suppress a decrease in number of free hydroxyl groups, resulting in preventing deterioration of hydrophilicity of the hydrophilic film for a long period of time.

In addition, the ascorbic acid to be added as the additional component has stereoisomers known as L-ascorbic acid and erythorbic acid, which are both encompassed in the scope of the present invention.

In the present invention, the blending ratios of the polyvinyl alcohol resin (PVA) used as the resin component and the ascorbic acid used as the additional component are as described below. The blending ratio of the PVA is typically 40 g/L or more and 100 g/L or less, preferably 50 g/L or more and 70 g/L or less, and the blending ratio of the ascorbic acid used as the additional component is typically 0.02 g/L or more and 39 g/L or less, preferably 0.04 g/L or more and 17 g/L or less. When the blending ratio of the PVA is less than 40 g/L, it may be difficult to achieve a desired film thickness by application of a coating. In contrast, when the blending ratio of the PVA is more than 100 g/L, stability of a coating may deteriorate. In addition, when the blending ratio of the ascorbic acid used as the additional component is less than 0.02 g/L, stable hydrophilicity may not be achieved. In contrast, when the blending ratio of the ascorbic acid is more than 39 g/L, problems such as a poor self-cleaning property and poor external appearance may occur. In addition, when the polyethylene glycol resin (PEG) is used as the resin component, the blending ratio of the polyethylene glycol resin (PEG) is typically 4 g/L or more and 15 g/L or less, preferably 9 g/L or more and 14 g/L or less, in view of the blending ratio to the PVA. When the blending ratio of the PEG is less than 4 g/L, an enhancing effect on hydrophilicity may deteriorate. In contrast, when the blending ratio of the PEG is more than 15 g/L, stability of a coating may deteriorate.

In the present invention, the hydroxyl value of the organic hydrophilic coating composition is preferably 550 mgKOH/g or more and 1,300 mgKOH/g or less, more preferably 700 mgKOH/g or more and 1,150 mgKOH/g or less. When the hydroxyl value falls within the above-mentioned range, satisfactory hydrophilicity is obtained over a long period of time. In this connection, acrylic resins as used in Japanese Patent No. 5319952 have remarkably low hydroxyl values. For example, an acrylic resin manufactured under the trade name UH-2000 by Toagosei Co., Ltd. has a hydroxyl value of about 20 mgKOH/g, and an acrylic resin manufactured under the trade name Hitaloid 6500 by Hitachi Chemical Company, Ltd. has a hydroxyl value of about 30 mgKOH/g. Accordingly, those acrylic resins are not appropriate as the resin component to be used in the organic hydrophilic coating composition of the present invention.

The organic hydrophilic coating composition of the present invention includes the polyvinyl alcohol resin (PVA) as the resin component and the ascorbic acid as the additional component, and may further include, if necessary, a third additional component, such as: an organo-copper, organic iodine, imidazole, isothiazoline, pyrithione, triazine, or silver preservative having an antibacterial or antifungal action for preventing corruption during storage; an anticorrosive agent, such as tannic acid, gallic acid, phytic acid, or phosphinic acid; a leveling agent, such as an alkyl ester of a polyalcohol or a polyethylene oxide condensate; a filler added in such an amount as not to impair compatibility, such as polyacrylamide or polyvinyl acetamide; a colorant, such as titanium oxide or a phthalocyanine compound; or a surfactant, such as an alkyl sulfate or alkyl sulfosuccinate surfactant.

The organic hydrophilic coating composition of the present invention is prepared by dissolving or dispersing the resin component, the additional component, and the third additional component in an appropriate dispersion medium, such as water, acetone, ethylene glycol monobutyl ether (also known as "butyl cellosolve" or "butycello"), preferably a water-based dispersion medium, such as water, isopropyl alcohol, or ethanol. In addition, a method of preparing the organic hydrophilic coating composition of the present invention is not particularly limited, but because the polyvinyl alcohol resin (PVA) has relatively poor solubility in water, the method preferably includes, for example, first, dispersing the PVA in water at ordinary temperature for from 5 min to 10 min, heating the resultant at from 80°C to 90°C for from 30 min to 60 min to dissolve the PVA, adding water thereto to achieve a predetermined concentration, subsequently, if necessary, adding the polyethylene glycol resin (PEG) under stirring to dissolve the PEG, then adding the ascorbic acid as a homogeneous aqueous solution thereto, and mixing the resultant.

A method of applying the organic hydrophilic coating composition of the present invention to each of the surfaces of various hard materials is also not particularly limited, and for example, there may be adopted: a method involving using a roll coater, which is typically adopted; a method involving using a gravure roll, which is useful for controlling the amount of the composition applied; a natural coating method, which is useful for forming a thick coating; or a reverse coating method, which is advantageous for forming a beautifully coated surface.

For example, in preparation of the aluminum material for a heat exchanger of the present invention, such as a precoated fin material, using the organic hydrophilic coating composition of the present invention, a hydrophilic film is formed on the surface of an aluminum material by, first, applying the coating composition to the surface of the aluminum material using, for example, a roll coater, and then heating the resultant under high-temperature air blowing using, for example, a floater oven, preferably heating the resultant under high-temperature air blowing at from 10 m/min to 30 m/min at a high temperature of from 200°C to 300°C for from 10 sec to 15 sec.

The thickness of the hydrophilic film formed on the surface of a hard material using the organic hydrophilic coating composition of the present invention varies depending on, for example, the kind of the hard material and intended purposes, and is not particularly limited. However, for example, when the hard material is a precoated fin material, the thickness is typically from about 0.05 µm to about 5 pm, preferably from about 0.1 µm to about 2 µm, more preferably from about 0.5 µm to about 1.5 µm. In addition, the ratio of the main three components contained in the hydrophilic film obtained in the present invention is 42.6 wt% to 96.1 wt% of the polyvinyl alcohol resin (PVA), 0.0 wt% to 27.3 wt% of the polyethylene glycol resin (PEG), and 0.017 wt% to 47.0 wt% of the ascorbic acid.

According to the investigations of the inventors of the present invention, the following assumption has been made. In the organic hydrophilic coating composition of the present invention, because two hydroxyl groups bonded to a five-membered ring in a molecule of the ascorbic acid having a hydrogen bond-suppressing effect have affinities for hydroxyl groups in two linear polymer chains adjacent to each other of the polyvinyl alcohol resin (PVA) in the resin component, the ascorbic acid enters a space between the two linear polymer chains to expand the space between the two linear polymer chains depending on the molecular size of the ascorbic acid, resulting in suppressing crystallization of the PVA by exhibiting the hydrogen bond-suppressing effect. In addition, the ascorbic acid permits access of a relatively small molecule, such as a water molecule, so that the composition exhibits excellent hydrophilicity for a long period of time, and at the same time, inhibits access of a relatively large molecule, such as oily smear, and a pollutant, such as house dust, so that the composition exhibits excellent pollution resistance. In addition, as described above, the composition exhibits excellent hydrophilicity for a long period of time, and at the same time, exhibits excellent pollution resistance by inhibiting access of a relatively large pollutant. Therefore, when the composition is used as, for example, a hydrophilic film of a precoated fin material, even if a pollutant, such as oily smear or house dust, adheres to the surface of the hydrophilic film during, for example, air conditioning for heating in which dew condensation water or the like is not generated, the degree of adhesion is not high. In addition, when water, such as dew condensation water, generated during, for example, air conditioning for cooling approaches the film, the water easily enters a space between the hydrophilic film and the pollutant to separate the pollutant from the surface of the hydrophilic film. As a result, the pollutant is washed out together with the water, such as dew condensation water, and hence the composition exhibits a self-cleaning property.

Preferred embodiments of the present invention are hereinafter specifically described based on Examples and Comparative Examples.

In the following Examples and Comparative Examples, properties such as hydrophilicity (initial hydrophilicity and long-term hydrophilicity), water resistance, adhesion, and a self-cleaning property were determined by the following methods.

### [Preparation of Test Piece]

In each of Examples 1 to 4, 6 to 9, 11, 12, and 14, and Comparative Examples 1, 2, and 4 to 7, a corrosion-resistant film was formed by chromate treatment to be described later on the surface of an aluminum material (AA3102; thickness: 0.10 mm) that had been subjected to degreasing treatment and washing treatment by ordinary methods, and in each of Examples 5, 10, and 13, and Comparative Example 3, a corrosion-resistant coating film was formed by surface treatment based on urethane primer treatment to be described later on the surface of the aluminum material. The aluminum materials were cut into a size of 7 cm×15 cm to prepare surface-treated aluminum pieces for preparation of a test piece.
(1) Chromate treatment: A corrosion-resistant film having a Cr content of 100 mg/m² was formed on the surface of an aluminum material using a chromate treatment agent (manufactured by Nippon Paint Co., Ltd., trade name: ALSURF 407/47).
(2) Urethane primer treatment: A corrosion-resistant coating film having a thickness of 0.6 g/m² was formed by applying a primer treatment agent (manufactured by DKS Co. Ltd., trade name: SUPERFLEX SF150) to the surface of an aluminum material and curing the agent at 270°C for 10 sec.

The organic hydrophilic coating compositions of Examples and Comparative Examples were separately applied to the surfaces of the resultant surface-treated aluminum pieces using a bar coater, and were baked under the conditions of 230°C and 10 sec to form hydrophilic films at from 0.6 g/m² to 0.7 g/m² on the surface of the surface-treated aluminum pieces. Thus, test pieces of Examples and Comparative Examples were prepared.

### [Evaluation of Hydrophilicity (Initial Hydrophilicity and Long-term Hydrophilicity)]

A press oil (manufactured by Idemitsu Kosan Co., Ltd., trade name: AF-2C) was applied to each of the test pieces of Examples and Comparative Examples thus prepared, and dried by heating under drying conditions of 160°C and 10 min, and initial hydrophilicity immediately after the drying and long-term hydrophilicity after immersion in reverse osmosis (RO) water cleaned with a RO membrane under immersion conditions of ordinary temperature, running water, and 500 hr were measured.

In this procedure, the initial hydrophilicity and the long-term hydrophilicity were each measured by adding 2 µL of pure water dropwise to the hydrophilic film of each test piece arranged horizontally and determining a contact angle of the formed water droplet using a contact angle meter (manufactured by Kyowa Interface Science Co., Ltd.: CA-A), and each hydrophilicity was evaluated in accordance with the following evaluation criteria: evaluation score 5: contact angle of ≤10°, evaluation score 4: contact angle of from 11° to 20°, evaluation score 3: 21° to 30°, evaluation score 2: 31° to 35°, and evaluation score 1: ≥36°. When the evaluation score was 2 or more, the test piece was considered to have hydrophilicity (acceptable).

### [Evaluation of Water Resistance]

Each of the test pieces of Examples and Comparative Examples was immersed in RO water at ordinary temperature for 240 hr under running water conditions. Whether or not the coating film on the surface of the test piece after the immersion had a defect, such as blister, was examined by visually observing the coating film, and whether or not the coating film had flaking was examined by a cross-cut tape test (previous JIS K 5400). When the test piece had no defect in the visual observation and no flaking in the tape peeling test, the test piece was evaluated as an acceptable one. In addition, when the test piece had one or both of the defect in the visual observation and the flaking in the tape peeling test, the test piece was evaluated as a rejected one.

### [Evaluation of Adhesion]

100 Squares each measuring 1 mm on a side were formed in the coating film surface of each of the test pieces of Examples and Comparative Examples with a box cutter in accordance with a cross-cut tape test (previous JIS K 5400). After that, an adhesive tape was attached onto the surface and then rapidly peeled therefrom, followed by examination of whether or not the test piece had flaking of any square. When the test piece had no flaking, the test piece was evaluated as an acceptable one. In addition, when the test piece had the flaking, the test piece was evaluated as a rejected one.

### [Evaluation of Self-cleaning Property]

A square mark measuring 15 mm wide by 15 mm long (area: 225 mm²) was drawn with a commercially available permanent marker (manufactured by PILOT Corporation, trade name: Twin Marker MFN-15FB-B) on the lower half area of the surface of the hydrophilic film of each of the test pieces of Examples and Comparative Examples to form an oily smear.

Subsequently, each of the test pieces with the oily smear was placed against a wall to make a tilt angle of 90° relative to the horizontal plane. Water was sprayed repeatedly 150 times with a spray (amount of water used in a single spraying operation: from 0.8 ml to 0.9 ml) to the upper half area of the test piece using a spraying device, and the ratio (removal ratio) of an area on which the oily smear had been washed out with water sprayed to the upper half area and flowing to the lower half area was determined. The spraying of water using the spraying device was carried out such that water was not sprayed directly to the oily smear.

The removal ratio (%) of the oily smear was determined by measuring an area of the oily smear washed out with water (washed-out area: mm²) after completion of flowing of water after the completion of its spraying from the upper half area to the lower half area and after drying of the surface of the test piece as a ratio of the washed-out area (mm²) to the total area of the oily smear (225 mm²).

Then, the self-cleaning property was evaluated in accordance with the following evaluation criteria: evaluation score 5: removal ratio of >81%, evaluation score 4: removal ratio of from 61% to 80%, evaluation score 3: removal ratio of from 41% to 60%, evaluation score 2: removal ratio of from 20% to 40%, and evaluation score 1: removal ratio of <20%. When the evaluation score was 2 or more, the test piece was evaluated to have a self-cleaning property (acceptable).

### [Comprehensive Evaluation]

Each of the organic hydrophilic coating compositions obtained in Examples and Comparative Examples was comprehensively evaluated by examining the composition for whether or not the composition was an acceptable product for all the evaluation items including initial hydrophilicity and long-term hydrophilicity relating to hydrophilicity, water resistance, adhesion, and a self-cleaning property, and by calculating the total of the evaluation scores of the initial hydrophilicity and the long-term hydrophilicity relating to hydrophilicity, and the self-cleaning property. The composition was evaluated in accordance with the following criteria: ⊚: the composition was acceptable for all the evaluation items and had a total evaluation score of 13 or more, ○: the composition was acceptable for all the evaluation items and had a total evaluation score of from 9 to 12, and ×: the composition was rejected for any of the evaluation items.

### [Examples 1 to 14 and Comparative Examples 1 to 4]

As a polyvinyl alcohol resin (PVA) serving as a resin component, there were used [PVA-1]: a polyvinyl alcohol having a degree of saponification of 99.3% and an average degree of polymerization of 1,000 (manufactured by Japan Vam & Poval Co., Ltd., trade name: VC-10), [PVA-2]: a polyvinyl alcohol having a degree of saponification of 98.0% and an average degree of polymerization of 1,700 (manufactured by Japan Vam & Poval Co., Ltd., trade name: JF-17L) , and [PVA-3] : a polyvinyl alcohol having a degree of saponification of 97.0% and an average degree of polymerization of 1,700 (manufactured by Japan Vam & Poval Co., Ltd., trade name: VM-17). In addition, as a polyethylene glycol resin (PEG) serving as a resin component, there were used [PEG-1] : a polyethylene glycol having a number-average molecular weight of 6,000 (manufactured by Sanyo Chemical Industries, Ltd., trade name: PEG-6000S), [PEG-2] : a polyethylene glycol having a number-average molecular weight of 1,500 (manufactured by Sanyo Chemical Industries, Ltd., trade name: PEG-1500), and [PEG-3]: a polyethylene glycol having a number-average molecular weight of 13,000 (manufactured by Sanyo Chemical Industries, Ltd., trade name: PEG-13000). In addition, vitamin C (L-ascorbic acid) [food additive grade] manufactured by Fuso Chemical Co., Ltd. was used as ascorbic acid serving as an additional component.

First, the polyvinyl alcohol resin (PVA) serving as the resin component was dispersed in water serving as a dispersion medium to prepare a PVA dispersion having a PVA concentration of 120 g/L, and the polyethylene glycol resin (PEG) serving as the resin component was dispersed in water serving as a dispersion medium to prepare a PEG dispersion having a PEG concentration of 100 g/L.

Next, the ascorbic acid serving as the additional component was dissolved before use in water serving as a solvent to prepare an ascorbic acid aqueous solution having an ascorbic acid concentration of 10 g/L.

Further, the PVA dispersion, the PEG dispersion, and the ascorbic acid aqueous solution prepared as above were used to prepare organic hydrophilic coating compositions of Examples and Comparative Examples having the compositions shown in Table 1.

### [Comparative Examples 5 to 7]

[PAAc] : polyacrylic acid (manufactured by BASF: Joncryl 1532) was used as a polyacrylic acid resin (PAAc) serving as a resin component. [PAAm]: polyacrylamide (manufactured by Arakawa Chemical Industries, Ltd.: Polymerset 512) was used as a polyacrylamide resin (PAAm) serving as a resin component. [SAcP] : acrylic/sulfonic acid-based copolymer (manufactured by Toagosei Co., Ltd.: Aron A-12SL) was used as a sulfonic acid resin (SAcP) serving as a resin component. In addition, [SAA]: surfactant (manufactured by NOF Corporation: RAPISOL A-90) was used.

First, the polyacrylic acid resin (PAAc) serving as the resin component was dispersed in water serving as a dispersion medium to prepare a PAAc dispersion having a PAAc concentration of 200 g/L. In addition, the polyacrylamide resin (PAAm) serving as the resin component was dispersed in water serving as a dispersion medium to prepare a PAAm dispersion having a PAAm concentration of 100 g/L. Further, the sulfonic acid resin (SAcP) serving as the resin component was dispersed in water serving as a dispersion medium to prepare a SAcP dispersion having a SAcP concentration of 100 g/L.

Next, the PAAc dispersion, the PAAm dispersion, the SAcP dispersion, the PVA dispersion, and the PEG dispersion prepared as above, and the surfactant and the ascorbic acid aqueous solution were used to prepare organic hydrophilic coating compositions of Comparative Examples having the compositions shown in Table 1.

For each of the organic hydrophilic coating compositions of Examples and Comparative Examples thus prepared, in accordance with a neutralization titration method described in JIS K0070-1992, an acetylating reagent was added to the sample, and the mixture was heated in a glycerin bath and cooled. After that, a phenolphthalein solution was added as an indicator, and titration was performed with a potassium hydroxide ethanolic solution to determine hydroxyl groups.

The results are shown in Table 1.

The organic hydrophilic coating compositions of Examples and Comparative Examples were used to prepare test pieces of Examples and Comparative Examples in conformity with the method described above, and the test pieces were evaluated for their properties including hydrophilicity (initial hydrophilicity and long-term hydrophilicity), water resistance, adhesion, and a self-cleaning property in conformity with the methods described above.

The results are shown in Table 1.

**Table 1**

| | | Composition of organic hydrophilic coating composition | | | | | Hydroxyl value of coating composition (mgKOH/g) | Properties of hydrophilic film | | | | | |
|---|---|---|---|---|---|---|---|---|---|---|---|---|---|
| | | Resin component | | | | Concentration of ascorbic acid (g/L) | | Hydrophilicity | | Water resistance | Adhesion | Self-cle aning property | Comprehensive evaluation |
| | | Kind | Concentration (g/L) | Kind | Concentration (g/L) | | | Initial | Long-t Long term | | | | |
| | 1 | PVA-1 | 50 | PEG-1 | 0 | 1.0 | 1,240 | 5 | 4 | Acceptable | Acceptable | 4 | ⊚ |
| | 2 | PVA-1 | 50 | PEG-1 | 5 | 0.02 | 1,150 | 4 | 3 | Acceptable | Acceptable | 5 | ○ |
| | 3 | PVA-1 | 50 | PEG-1 | 10 | 0.5 | 1,046 | 5 | 5 | Acceptable | Acceptable | 5 | ⊚ |
| | 4 | PVA-1 | 55 | PEG-1 | 11 | 5.0 | 980 | 5 | 5 | Acceptable | Acceptable | 5 | ⊚ |
| | 5 | PVA-1 | 55 | PEG-1 | 11 | 10.0 | 916 | 5 | 4 | Acceptable | Acceptable | 5 | ⊚ |
| | 6 | PVA-1 | 65 | PEG-1 | 12 | 20.0 | 848 | 5 | 4 | Acceptable | Acceptable | 5 | ⊚ |
| Example | 7 | PVA-1 | 55 | PEG-1 | 11 | 30.0 | 725 | 5 | 4 | Acceptable | Acceptable | 4 | ⊚ |
| | 8 | PVA-1 | 55 | PEG-1 | 11 | 39.0 | 663 | 5 | 4 | Acceptable | Acceptable | 3 | ○ |
| | 9 | PVA-2 | 50 | PEG-1 | 11 | 5.0 | 947 | 5 | 4 | Acceptable | Acceptable | 5 | ⊚ |
| | 10 | PVA-2 | 55 | PEG-2 | 11 | 5.0 | 968 | 5 | 4 | Acceptable | Acceptable | 5 | ⊚ |
| | 11 | PVA-2 | 55 | PEG-3 | 13 | 5.0 | 941 | 5 | 4 | Acceptable | Acceptable | 5 | ⊚ |
| | 12 | PVA-3 | 50 | PEG-1 | 11 | 5.0 | 937 | 5 | 3 | Acceptable | Acceptable | 4 | ○ |
| | 13 | PVA-3 | 55 | PEG-2 | 11 | 5.0 | 958 | 5 | 3 | Acceptable | Acceptable | 4 | ○ |
| | 14 | PVA-3 | 55 | PEG-3 | 13 | 5.0 | 932 | 5 | 3 | Acceptable | Acceptable | 4 | ○ |
| Comparative Example | 1 | PVA-1 | 55 | PEG-1 | 11 | 0.00 | 1,055 | 2 | 1 | Acceptable | Acceptable | 5 | × |
| | 2 | PVA-1 | 55 | PEG-1 | 11 | 0.01 | 1,055 | 2 | 1 | Acceptable | Acceptable | 5 | × |
| | 3 | PVA-1 | 55 | PEG-1 | 11 | 40.0 | 657 | 5 | 1 | Acceptable | Acceptable | 1 | × |
| | 4 | PVA-1 | 55 | PEG-1 | 11 | 45.0 | 627 | 5 | 1 | Acceptable | Acceptable | 1 | × |
| | 5 | PAAc:SAcP:SAA=20:4:0.4 (weight ratio) | | | | 1.0 | 45 | 4 | 2 | Acceptable | Acceptable | 1 | × |
| | 6 | PAAc:PAAm:PEG-1=2:7:1 (weight ratio) | | | | 1.0 | 37 | 3 | 1 | Acceptable | Acceptable | 1 | × |
| | 7 | PAAm:PEG-1:PVA-1=8:1:1 (weight ratio) | | | | 1.0 | 156 | 3 | 1 | Acceptable | Acceptable | 1 | × |

| | | | | | | | | | | | | | |
|---|---|---|---|---|---|---|---|---|---|---|---|---|---|
| (Notes) PVA-1: PVA having a degree of saponification of 99.3% and an average degree of polymerization of 1,000, PVA-2: PVA having a degree of saponification of 98.0% and an average degree of polymerization of 1,700, PVA-3: PVA having a degree of saponification of 97.0% and an average degree of polymerization of 1,700, PEG-1: PEG having a number-average molecular weight of 6000, PEG-2: PEG having a number-average molecular weight of 1,500, PEG-3: PEG having a number-average molecular weight of 13,000, PAAc: polyacrylic acid (manufactured by BASF: Joncryl 1532), SAcP: sulfonic acid polymer (acrylic/sulfonic acid-based copolymer: manufactured by Toagosei Co., Ltd.: Aron A-12SL), PAAm: polyacrylamide (manufactured by Arakawa Chemical Industries, Ltd.: Polymerset 512), SAA: surfactant (manufactured by NOF Corporation: RAPISOL A-90). | | | | | | | | | | | | | |

## Claims

1. An organic hydrophilic coating composition, comprising:
a polyvinyl alcohol resin as a resin component at a ratio of from 40 g/L to 100 g/L, a polyethylene glycol resin as a resin component at a ratio of from 4 g/L to 15 g/L; and
ascorbic acid as an additional component at a ratio of from 0.02 g/L to 39 g/L,
the organic hydrophilic coating composition having a hydroxyl value of from 550 mgKOH/g to 1,300 mgKOH/g measured according to a neutralization titration method described in JIS K0070-1992.

2. The organic hydrophilic coating composition according to claim 1, wherein the polyvinyl alcohol resin comprises a completely saponified polyvinyl alcohol resin.

3. A hydrophilic film, which is formed by applying and baking the organic hydrophilic coating composition of claim 1 or 2, wherein the hydrophilic film is configured to cover a part or whole of a surface of a main body of a hard material.

4. An aluminum material for a heat exchanger, comprising a hydrophilic film formed by applying and baking the organic hydrophilic coating composition of claim 1 or 2 on a part or whole of a surface of an aluminum material made of aluminum or an aluminum alloy.

5. The aluminum material for a heat exchanger according to claim 4, wherein the aluminum material for a heat exchanger comprises a precoated fin material.

## Patentansprüche

1. Eine organische hydrophile Beschichtungszusammensetzung, umfassend:
ein Polyvinylalkoholharz als eine Harzkomponente in einem Verhältnis von 40 g/L zu 100 g/L, ein Polyethylenglycolharz als eine Harzkomponente in einem Verhältnis von 4 g/L zu 15 g/L; und
Ascorbinsäure als eine zusätzliche Komponente in einem Verhältnis von 0,02 g/L bis 39 g/L,
wobei die organische hydrophile Beschichtungszusammensetzung einen Hydroxylwert von 550 mgKOH/g bis 1300 mgKOH/g, gemessen nach einem Neutralisationstitrationsverfahren beschrieben in JIS K0070-1992, aufweist.

2. Die organische hydrophile Beschichtungszusammensetzung nach Anspruch 1, wobei das Polyvinylalkoholharz ein vollständig verseiftes Polyvinylalkoholharz umfasst.

3. Ein hydrophiler Film, der durch Aufbringen und Einbrennen der organischen hydrophilen Beschichtungszusammensetzung nach Anspruch 1 oder 2 gebildet wird, wobei der hydrophile Film so konfiguriert ist, dass er einen Teil oder die gesamte Oberfläche eines Hauptkörpers aus einem harten Material bedeckt.

4. Ein Aluminiummaterial für einen Wärmetauscher, umfassend einen hydrophilen Film, der gebildet wird durch Aufbringen und Einbrennen der organischen hydrophilen Beschichtungszusammensetzung nach Anspruch 1 oder 2 auf einen Teil oder die gesamte Oberfläche eines Aluminiummaterials, hergestellt aus Aluminium oder einer Aluminiumlegierung.

5. Das Aluminiummaterial für einen Wärmetauscher nach Anspruch 4, wobei das Aluminiummaterial für einen Wärmetauscher ein vorbeschichtetes Rippenmaterial umfasst.

## Revendications

1. Composition de revêtement hydrophile organique, comprenant :
une résine de poly(alcool vinylique) en tant que composant résine en une proportion de 40 g/l à 100 g/l, une résine de polyéthylène glycol en tant que composant résine en une proportion de 4 g/l à 15 g/l; et
de l'acide ascorbique en tant que composant additionnel en une proportion de 0,02 g/l à 39 g/l,
la composition de revêtement hydrophile organique ayant un indice d'hydroxyle de 550 mg KOH/g à 1 300 mg KOH/g mesuré conformément à une méthode de titrage avec neutralisation décrite dans JIS K0070-1992.

2. Composition de revêtement hydrophile organique selon la revendication 1, dans laquelle la résine de poly(alcool vinylique) comprend une résine de poly(alcool vinylique) complètement saponifiée.

3. Film hydrophile, qui est formé par application et cuisson de la composition de revêtement hydrophile organique de la revendication 1 ou 2, lequel film hydrophile est configuré pour couvrir toute ou partie d'une surface d'un corps principal d'un matériau dur.

4. Matériau en aluminium pour un échangeur de chaleur, comprenant un film hydrophile formé par application et cuisson de la composition de revêtement hydrophile organique de la revendication 1 ou 2 sur toute ou partie d'une surface d'un matériau en aluminium fait d'aluminium ou d'un alliage d'aluminium.

5. Matériau en aluminium pour un échangeur de chaleur selon la revendication 4, lequel matériau en aluminium pour un échangeur de chaleur comprend un matériau d'ailette pré-revêtu.
